Europäisches Patentamt

European Patent Office

Office européen des brevets

(11) Numéro de publication : **0 082 756**
**B1**

(12) **FASCICULE DE BREVET EUROPÉEN**

(45) Date de publication du fascicule du brevet :
20.02.85

(51) Int. Cl.⁴ : **H 04 B   1/12, H 01 Q   1/52**

(21) Numéro de dépôt : **82402264.4**

(22) Date de dépôt : **10.12.82**

(54) **Procédé et dispositif électroniques de découplage d'antenne.**

(30) Priorité : **18.12.81 FR 8123730**

(43) Date de publication de la demande :
**29.06.83 Bulletin 83/26**

(45) Mention de la délivrance du brevet :
**20.02.85 Bulletin 85/08**

(84) Etats contractants désignés :
**DE GB**

(56) Documents cités :
**US-A- 3 021 521**
**US-A- 3 155 965**
**US-A- 3 696 429**
**US-A- 3 699 444**

(73) Titulaire : **THOMSON-CSF**
**173, Boulevard Haussmann**
**F-75379 Paris Cedex 08 (FR)**

(72) Inventeur : **Ganem, Hervé**
**THOMSON-CSF SCPI 173, Bld Haussmann**
**F-75379 Paris Cedex 08 (FR)**

(74) Mandataire : **Lincot, Georges et al**
**THOMSON-CSF SCPI 173, Bld Haussmann**
**F-75379 Paris Cedex 08 (FR)**

Jouve, 18, rue St-Denis, 75001 Paris, France

**0 082 756**

**Description**

La présente invention concerne un procédé et un dispositif électroniques de découplage d'antenne pour supprimer un signal brouilleur, modulé en fréquence, d'un signal utile, également modulé en fréquence, reçu sur une antenne de réception par couplage avec une antenne d'émission située dans le voisinage immédiat de l'antenne de réception, le couplage pouvant avoir lieu directement ou indirectement par réflexions multiples sur des objets environnants tels que des bâtiments.

Le procédé et le dispositif selon l'invention s'appliquent particulièrement au cas où le signal brouilleur, qui est une réplique atténuée et déphasée du signal d'émission, est représentable par une équation ayant la forme

$$c'(t) = kB \cos (\omega_1 t + \Phi_B(t) + \theta_B + \lambda) \qquad (1)$$

où :

B représente l'amplitude du signal d'émission,

$\omega_1$ représente la pulsation de la fréquence porteuse d'émission,

$\Phi_B(t)$ représente la modulation de phase ou de fréquence du signal d'émission,

$\theta_B$ le déphasage du signal de modulation,

k et $\lambda$ étant respectivement les coefficients d'atténuation et de rotation de phase introduits par l'espace séparant l'antenne de réception de l'antenne d'émission.

Il est connu un dispositif qui permet de supprimer au moins en partie le signal brouilleur modulé en fréquence reçu par une antenne. Ce dispositif est constitué par un ensemble d'éléments qui permettent, à partir du signal brouilleur prélevé sur l'antenne d'émission, de produire un signal de compensation dont l'atténuation et la rotation de phase correspondent à l'atténuation et à la rotation de phase que subit le signal brouilleur en passant de l'antenne d'émission à l'antenne de réception, dans l'hypothèse, où le signal brouilleur subit, dans l'espace inter-antenne, une atténuation et une rotation de phase constante dans le temps, indépendantes du signal de modulation $\Phi_B(t)$. Le signal de compensation est soustrait du signal composé reçu par le récepteur pour ne conserver que la partie utile du signal reçu.

L'ajustement des valeurs d'atténuation k et de rotation de phase $\lambda$ du signal de compensation est obtenu par réglage de deux atténuateurs variables dont les valeurs de réglage $k_1$ et $k_2$ sont déterminées par les relations

$$k_1 = k \cos \lambda \qquad (2)$$

et

$$k_2 = k \sin \lambda \qquad (3)$$

Le dispositif calcule d'abord les différences $\varepsilon_1 = k \cos \lambda - k_1$ (4) et $\varepsilon_2 = k \sin \lambda - k_2$ (5) et une boucle de régulation ajuste les valeurs $k_1$ et $k_2$ des atténuateurs réglables pour annuler ces différences. A l'équilibre lorsque les différences $\varepsilon_1$ et $\varepsilon_2$ sont nulles, le signal de compensation a les mêmes caractéristiques d'amplitude et de phase que le signal brouilleur reçu.

Or, il s'avère qu'en pratique, lorsque la boucle de régulation a atteint son équilibre, les signaux $\varepsilon_1$ et $\varepsilon_2$ ne s'annulent pas et qu'il reste un résidu alternatif pour chacun de ces signaux qui est cohérent en phase ou en opposition de phase avec le signal modulant $\Phi_B(t)$ du signal brouilleur émis. Il s'ensuit que le dispositif précité annule bien la fréquence porteuse du signal brouilleur mais qu'il reste inefficace pour les fréquences de modulation. Dans ces conditions les composantes du signal brouilleur ne se trouvent que partiellement éliminées.

Le résultat imparfait ainsi obtenu s'explique en partie par le fait que l'atténuation et la rotation de phase subies par le signal brouilleur au cours de son trajet dans l'espace inter-antennes ne sont pas des constantes indépendantes du signal de modulation $\Phi_B(t)$. Bien au contraire il résulte des hypothèses et des essais effectués au cours de l'élaboration du dispositif de l'invention que chaque fréquence du spectre de l'onde modulée subit des atténuations et des déphasages qui dépendent de sa position dans le spectre. Il apparaît qu'au voisinage de la fréquence porteuse $f_0$, les variations de la phase et de l'amplitude de chaque fréquence du spectre de l'onde modulée reçue sont à peu près linéaires en fonction de sa position dans le spectre. Par conséquent il est possible d'assimiler la fonction de transfert de l'espace inter-antenne à celle d'un filtre linéaire d'équation

$$H_{(\omega)} = (k_0 + \varepsilon_k(\omega - \omega_1)) \, e^{j(\lambda_0 - \varepsilon_\lambda)(\omega - \omega_1)} \qquad (6)$$

où

$k_0$ est le coefficient d'atténuation du filtre à la fréquence $f_0$,

$\varepsilon_k$ représente la pente de la droite représentant l'atténuation au voisinage de la fréquence $f_0$,

$\omega_1 = \omega_0 + \Delta\omega$, représente la pulsation de l'onde porteuse du signal brouilleur et $\omega_0$ la pulsation de l'onde porteuse du signal utile,

2

$\lambda_0$ représente le déphasage du filtre à la fréquence $f_0$,

$\varepsilon_\lambda$ représente la pente de la droite représentant le déphasage au voisinage de la fréquence $f_0$.

Il s'ensuit qu'un signal brouilleur modulé en fréquence, représentable par l'équation

$$c = B \cos (\omega_1 t + \Phi_B(t) + \theta_B) \qquad (7)$$

est transformé après avoir traversé le filtre linéaire constitué par l'espace inter-antenne en un signal

$$c'(t) = (B/2) (k_0 + \varepsilon_\kappa \Phi'_B(t - \varepsilon_\lambda)) \cos (\omega_1 t + \Phi_B(t) + \theta_B(t) + \lambda_0 - \varepsilon_\lambda \Phi'_B(t)) \qquad (8)$$

Il en résulte que les coefficients k et $\lambda$ de l'équation (1) qui étaient considérés comme des constantes dans l'élaboration du dispositif antérieur, dépendent en fait du temps et sont représentables par les équations

$$k(t) = k_0 + \varepsilon_k \cdot \Phi'_B(t - \varepsilon_\lambda) \qquad (9)$$

et

$$\lambda(t) = \lambda_0 - \varepsilon_\lambda \cdot \Phi'_B(t) \qquad (10)$$

où $\Phi'_B(t)$ représente la dérivée du premier ordre du signal de modulation de phase $\Phi_B(t)$.

Le but de l'invention est de pallier les inconvénients précités.

A cet effet l'invention a pour premier objet un procédé électronique de découplage d'antenne pour supprimer un signal brouilleur, modulé en fréquence par un signal basse fréquence d'amplitude $\Phi'_B(t)$, reçu par une antenne de réception par couplage avec une antenne d'émission située dans le voisinage immédiat de l'antenne de réception, le signal brouilleur ayant subi dans l'espace inter-antennes une atténuation k et un déphasage $\lambda$, consistant à prélever au niveau de l'antenne d'émission le signal brouilleur, pour élaborer deux signaux respectivement en phase et en quadrature avec le signal brouilleur, à atténuer les signaux en phase et en quadrature à l'aide d'atténuateurs réglables, et à partir du signal reçu par l'antenne de réception, des signaux atténués, des signaux en phase et en quadrature et des valeurs d'atténuation $k_1$ et $k_2$ des atténuateurs, à former deux signaux $((k_1 - k(t) \cos \lambda(t)), (k_2 - k(t) \sin \lambda(t)))$ représentant la différence de valeurs entre les coefficients d'atténuation des atténuateurs variables et les produits respectifs des cosinus et sinus du déphasage $\lambda(t)$ par la valeur de l'atténuation $k(t)$, puis à appliquer respectivement les deux signaux ainsi formés à l'entrée de deux intégrateurs pour élaborer en sortie de ces deux intégrateurs deux signaux de commande statique des atténuateurs de façon à annuler la composante de la fréquence porteuse du signal brouilleur reçu caractérisé en ce qu'il consiste à superposer à chacun des signaux de commande statique, un signal dont l'amplitude est proportionnelle, à tout instant, à l'écart entre la fréquence porteuse du signal brouilleur et la valeur instantanée de la fréquence du signal de modulation.

Selon une autre caractéristique le procédé selon l'invention consiste pour obtenir le signal devant être superposé aux signaux de commande statique des atténuateurs, à séparer les composantes continue et alternative de chaque signal de commande, à transformer la composante alternative obtenue en une grandeur continue proportionnelle à l'amplitude de la composante alternative, pour la multiplier par le signal basse fréquence d'amplitude $\Phi'_B(t)$.

L'invention a également pour objet un dispositif pour la mise en œuvre du procédé selon l'invention.

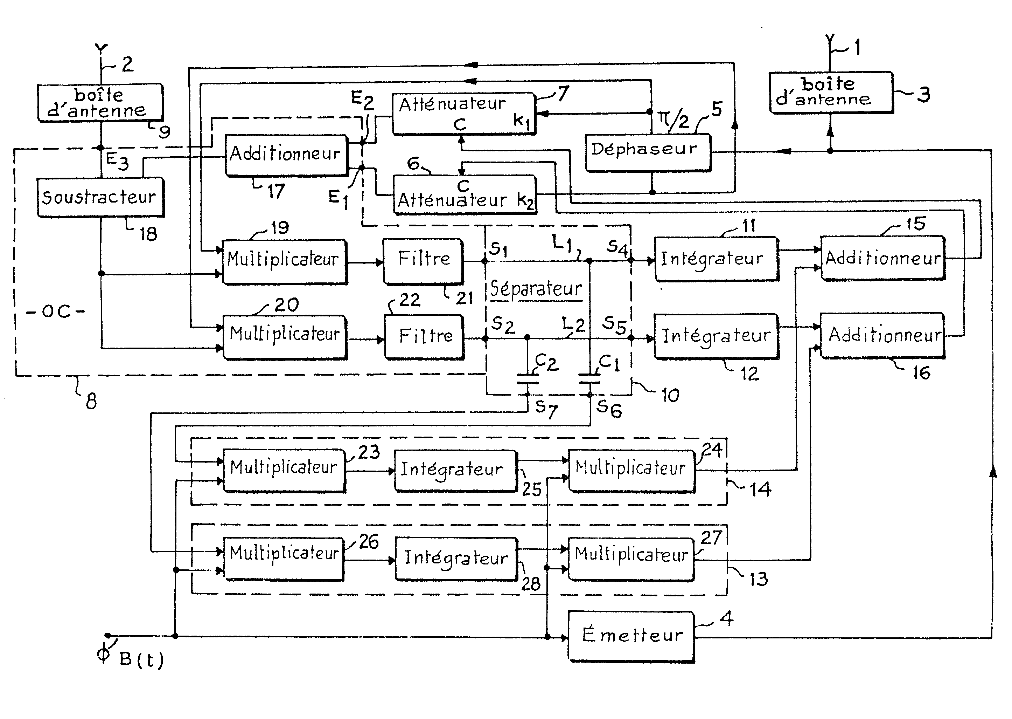

D'autres caractéristiques et avantages de l'invention apparaîtront au cours de la description faite au regard de la figure unique annexée qui représente le dispositif de découplage d'antenne selon l'invention.

Le dispositif représenté sur la figure unique comprend une antenne d'émission 1 et une antenne de réception 2. L'antenne d'émission 1 est reliée par l'intermédiaire d'une boîte d'antenne 3 à l'étage de sortie d'un émetteur de fréquence modulée 4. L'étage à modulation de fréquence 4 reçoit sur son entrée un signal basse fréquence d'amplitude $\Phi'_B(t)$ émis par une source de modulation non représentée. Un déphaseur 5 est relié par son entrée à la boîte d'antenne 3 et transmet sur ses sorties un signal en phase avec le signal d'émission vers l'entrée d'un atténuateur variable 6, et un signal en quadrature avec le signal d'émission vers l'entrée d'un atténuateur variable 7. Les signaux de sortie des atténuateurs variables 6 et 7 sont transmis aux entrées respectives $E_1$ et $E_2$ d'un organe de calcul 8. L'organe de calcul 8 reçoit par ailleurs sur son entrée $E_3$ le signal reçu par l'antenne de réception 2 et transitant au travers de la boîte d'antenne 9. L'organe de calcul 8 est également relié par ses sorties $S_1$ et $S_2$ à un organe 10 séparateur des composantes alternatives et continues composant les signaux de sortie de l'organe de calcul 8. Les sorties $S_4$ à $S_7$ de l'organe séparateur 10 sont reliées respectivement aux entrées des organes de commande 11 à 14. La sortie de l'organe de commande 11 est reliée à une entrée d'un additionneur 15 qui est relié par une deuxième entrée à la sortie de l'organe de commande 14. De même la sortie de l'organe de commande 12 est reliée à une entrée d'un additionneur 16 dont la deuxième entrée est reliée à la sortie d'un organe de commande 13. Les sorties respectives des additionneurs 15 et 16 sont reliées respectivement aux entrées de commande c des atténuateurs variables 6 et 7.

L'organe de calcul 8 comprend un additionneur 17, un soustracteur 18, deux multiplicateurs 19 et 20

3

ainsi que des filtres 21 et 22. L'additionneur 17 est relié par ses deux entrées respectives $E_1$ et $E_2$ de l'organe de calcul 8 et par sa sortie à une entrée du soustracteur 18 dont l'autre entrée est reliée à l'entrée $E_3$ de l'organe de calcul 8, la sortie du soustracteur 18 est reliée d'une part à une entrée du multiplicateur 19 et d'autre part à une entrée du multiplicateur 20. Le multiplicateur 19 est relié par une deuxième entrée à la sortie du déphaseur 5 qui délivre un signal en quadrature par rapport au signal d'émission. La deuxième entrée du multiplicateur 20 est reliée à la sortie du déphaseur 5 qui délivre un signal en phase avec le signal d'émission. Les sorties respectives des multiplicateurs 19 et 20 sont reliées aux entrées respectives de deux filtres passe-bas 21 et 22. Les sorties respectives des filtres 21 et 22 sont reliées respectivement aux sorties $S_1$ et $S_2$ de l'organe de calcul 8.

Le séparateur 10 est constitué par deux conducteurs $L_1$ et $L_2$ reliant respectivement la sortie $S_1$ de l'organe de calcul 8 à la sortie $S_4$ du séparateur et la sortie $S_2$ de l'organe de calcul 8 à la sortie $S_5$ du séparateur et par deux condensateurs $C_1$ et $C_2$. Une extrémité du condensateur $C_1$ est reliée au conducteur $L_1$ et une extrémité du condensateur $C_2$ est reliée au conducteur $L_2$. Les autres extrémités des condensateurs $C_1$ et $C_2$ sont reliées respectivement aux sorties $S_6$ et $S_7$ de l'atténuateur 10. Les organes de commande 11 et 12 sont constitués par des intégrateurs. L'organe de commande 13 est constitué par deux multiplicateurs 23 et 24 et par un intégrateur 25. Une entrée du multiplicateur 23 est reliée à la sortie $S_6$ du séparateur 10 et son autre entrée reçoit le signal basse fréquence de modulation de fréquence d'amplitude $\Phi'_B(t)$. Une entrée du multiplicateur 24 est reliée à la sortie de l'intégrateur 25 et son autre entrée est reliée à la source de modulation. L'intégrateur 25 a son entrée reliée à la sortie du multiplicateur 23. La sortie du multiplicateur 24 est appliquée à une entrée de l'additionneur 16. De même l'organe de commande 14 comprend deux multiplicateurs 26 et 27 et un intégrateur 28. Le multiplicateur 26 est relié par une entrée à la sortie $S_7$ du séparateur 10 et par son autre entrée à la source de modulation. La sortie du multiplicateur 26 est reliée à l'entrée de l'intégrateur 28. Le multiplicateur 27 est relié par une entrée à la source de modulation délivrant le signal $\Phi'_B(t)$ et par son autre entrée à la sortie de l'intégrateur 28. La sortie du multiplicateur 27 est reliée à une entrée de l'additionneur 15. L'ensemble des dispositifs matériels utilisés pour la réalisation du dispositif selon l'invention fait partie des dispositifs bien connus dans l'état de la technique et leurs détails de réalisation n'ont par conséquent pas besoin d'être décrits.

On notera toutefois pour faciliter la réalisation du dispositif qui vient d'être décrit, que les atténuateurs variables 6 et 7 pourront être constitués par les atténuateurs P5 ATTL400 commercialisés par la Société des Etats-Unis d'Amérique OLEKTRON et que le déphaseur 5 pourra être constitué par le composant PSCQZ commercialisé par la Société MINICIRCUIT des Etats-Unis d'Amérique.

Le fonctionnement du dispositif qui vient d'être décrit est le suivant. Le signal brouilleur émis par l'émetteur 4 suit deux trajets différents. Un premier trajet est constitué par le chemin suivi dans l'air par l'onde électromagnétique résultante entre l'antenne 1 d'émission et l'antenne 2 de réception. Le deuxième trajet est constitué par le cheminement du signal brouilleur au travers du dispositif électronique de découplage d'antenne de l'invention. Le signal émis par l'antenne 1 est un signal modulé en fréquence par le signal de modulation basse fréquence d'amplitude $\Phi'_B(t)$ reçu à l'entrée de l'émetteur à modulation de fréquence 4. De façon connue le signal basse fréquence d'amplitude $\Phi'_B(t)$ est transformé à l'intérieur de l'émetteur 4 pour obtenir la modulation de phase $\Phi_B(t)$ du signal d'émission. Ce signal d'émission est par conséquent représenté par l'équation (7)

$$c(t) = B \ (\cos \omega_1 t + \Phi_B(t) + \theta_B)$$

où

$$\omega_1 = \omega_0 + \Delta\omega.$$

Le signal reçu par l'antenne de réception 2 est composé d'un signal utile $u(t)$ et du signal brouillé $c'(t)$ reliés par l'équation

$$e(t) = u(t) + c'(t) \tag{11}$$

$c'(t)$ étant représenté par l'équation (1) précitée et le signal utile $u(t)$ ayant la forme

$$u(t) = S_u \ \cos \ (\omega_0 t + \Phi_u(t) + \theta_u) \tag{12}$$

où $\Phi_u(t)$ représente la modulation de phase ou de fréquence du signal utile et $\theta_u$ représente le déphasage du signal de modulation.

A partir du signal $c(t)$, le déphaseur 5 délivre deux signaux en quadrature $c_1(t)$ et $c_2(t)$ représentables par les équations :

$$c_1(t) = B \cos \ (\omega_0 t + \Delta\omega t + \Phi_B(t) + \theta_B) \tag{13}$$

et

$$c_2(t) = B \sin \ (\omega_0 t + \Delta\omega t + \Phi_B(t) + \theta_B) \tag{14}$$

Les atténuateurs variables 6 et 7 délivrent sur leurs sorties les signaux $k_1 c_1(t)$ et $k_2 c_2(t)$. Ces signaux sont additionnés dans l'additionneur 17 et le résultat de l'addition est soustrait dans le soustracteur 18 du signal $e_{(t)}$ reçu à l'entrée $E_3$ de l'organe de calcul 8. La sortie du soustracteur 18 délivre par conséquent un signal :

$$e'(t) = e(t) - (k_1 c_1(t) + k_2 c_1(t)) \tag{15}$$

Le signal $e'(t)$ est multiplié dans les multiplicateurs 19 et 20, par les composantes en phase et en quadrature du signal brouilleur $c(t)$ délivrées sur les sorties du déphaseur 5. Les sorties des multiplicateurs 19 et 20 délivrent respectivement deux signaux $e_1(t)$ et $e_2(t)$ qui après filtrage dans les filtres passe-bas 21 et 22 sont représentables par les équations :

$$e_1(t) = ((S_u \cdot B)/2) \cos (\Delta \omega t + \Phi_B(t) - \Phi_u(t) - \Delta \theta) + (B^2/2) (k(t) \cos \lambda(t) - k_1) \tag{16}$$
$$e_2(t) = ((S_u \cdot B)/2) \sin (\Delta \omega t + \Phi_B(t) - \Phi_u(t) + \Delta \theta) - (B^2/2) (k(t) \cos \lambda(t) + k_2) \tag{17}$$

avec $\Delta \theta = \theta_B - \theta_u$.

Les signaux $e_1(t)$ et $e_2(t)$ sont composés chacun d'une composante à valeur moyenne nulle et d'une composante non nulle. Après intégration dans les intégrateurs 11 et 12 la composante à valeur moyenne nulle disparaît et il ne subsiste sur les sorties $S_1$ et $S_2$ de l'organe de calcul 8 que deux signaux d'erreur $e'_1(t)$ et $e'_2(t)$ qui ont pour équation :

$$e'_1(t) = k(t) \cdot \cos \lambda(t) - k_1 \tag{18}$$

et

$$e'_2(t) = k(t) \cdot \sin \lambda(t) - k_2 \tag{19}$$

Comme l'atténuation $k(t)$ et le déphasage $\lambda(t)$ dépendent des constantes $\varepsilon_k$ et $\varepsilon_\lambda$ du filtre linéaire constitué par l'espace inter-antenne, les signaux $e'_1(t)$ et $e'_2(t)$ peuvent être exprimés en faisant intervenir ces constantes par les développements théoriques suivants.

En substituant dans les équations (18) et (19) les valeurs de $k(t)$ et $\lambda(t)$ exprimées par les équations (9) et (10) en simplifiant dans les développements les infiniments petits du deuxième et troisième ordre. Les composantes $k(t) \cos \lambda(t)$ et $k(t) \sin \lambda(t)$ des signaux $e'_1(t)$ et $e'_2(t)$ s'expriment alors sous la forme

$$k(t) \cos \lambda(t) = k_0 \cos \lambda_0 + \Phi'_B(t) (k_0 \varepsilon_\lambda \cdot \sin \lambda_0 + \varepsilon_k \cos \lambda_0) \tag{20}$$
$$k(t) \sin \lambda(t) = k_0 \sin \lambda_0 + \Phi'_B(t) (- k_0 \varepsilon_\lambda \cos \lambda_0 + \varepsilon_k \sin \lambda_0) \tag{21}$$

où $\Phi'_B(t)$ représente la modulation de fréquence du signal émis.

En reportant les expressions (20) et (21) de $k(t) \cos \lambda(t)$ et $k(t) \sin \lambda(t)$ dans les expressions (18) et (19) on fait apparaître que les signaux $e'_1(t)$ et $e'_2(t)$ sortant des filtres 21 et 22 se composent des composantes continues respectives

$$e'_{1a}(t) = k_1 - k_0 \cos \lambda_0 \tag{22}$$
$$e'_{2a}(t) = k_2 - k_0 \sin \lambda_0 \tag{23}$$

et des composantes alternatives respectives

$$e'_{1b}(t) = \Phi'_B(t) (k_0 \varepsilon_\lambda \sin \lambda_0 + \varepsilon_k \cos \lambda_0) \tag{24}$$
$$e'_{2b}(t) = \Phi'_B(t) (- k_0 \varepsilon_\lambda \cos \lambda_0 + \varepsilon_k \sin \lambda_0) \tag{25}$$

Les composantes continues des signaux $e_1(t)$ et $e_2(t)$ sont appliquées respectivement aux entrées des intégrateurs 11 et 12. Ces composantes continues sont par contre bloquées à l'entrée des organes de commande 13 et 14 par les condensateurs $C_1$ et $C_2$. Les composantes alternatives sont appliquées aux entrées respectives des multiplicateurs 23 et 26 qui exécutent une multiplication de ces composantes avec le signal de modulation $\Phi'_B(t)$ et qui appliquent les résultats des multiplications aux entrées respectives des intégrateurs 25 et 28 qui délivrent des signaux dont l'amplitude est proportionnelle au signal $\Phi'_B(t)$. Les signaux de sortie des intégrateurs 25 et 28 sont multipliés à nouveau par le signal $\Phi'_B(t)$ à l'aide des multiplicateurs 24 et 27 et le résultat de cette multiplication est transmis aux entrées respectives des additionneurs 16 et 15. Les multiplicateurs 24 et 27 ont un rôle d'amplificateur à gain variable, la valeur de leur gain étant déterminée par l'amplitude du signal $\Phi'_B(t)$. Comme l'amplitude du signal $\Phi'_B(t)$ représente à tout instant l'écart de fréquence entre la fréquence porteuse du signal brouilleur et la valeur instantanée de la fréquence du signal basse fréquence de modulation, les signaux de sortie des multiplicateurs 24 et 27 ont une amplitude proportionnelle à cet écart de fréquence. L'additionneur 15 délivre un signal de sortie qui est égal à la somme des signaux obtenus à la sortie de l'intégrateur 11 et de l'organe de commande 14, ce signal agit sur l'entrée de commande de l'atténuateur variable 17 dont le coefficient d'atténuation $k_1$ va varier de façon à annuler les composantes continues et alternatives du signal $e_1(t)$. De même la sortie de l'additionneur 16 délivre un signal qui est la somme du signal sortant de l'intégrateur 12 et de l'organe de commande 13, ce signal agit sur la commande de l'atténuateur variable 6 qui évolue de façon à annuler les composantes continues et alternatives du signal $e_2(t)$.

**Revendications**

1. Procédé électronique de découplage d'antenne pour supprimer un signal brouilleur, modulé en fréquence par un signal basse fréquence d'amplitude $\Phi'_B(t)$, reçu par une antenne de réception (2) par couplage avec une antenne d'émission (1) située dans le voisinage immédiat de l'antenne de réception, le signal brouilleur ayant subi dans l'espace inter-antennes une atténuation $k(t)$ et un déphasage $\lambda(t)$, du type consistant à prélever, au niveau de l'antenne d'émission (1), le signal brouilleur, pour élaborer deux signaux respectivement en phase et en quadrature avec le signal brouilleur, à atténuer les signaux en phase et en quadrature à l'aide d'atténuateurs réglables (6, 7), et à partir du signal reçu par l'antenne de réception (2), des signaux atténués, des signaux en phase et en quadrature et des valeurs d'atténuation $k_1$ et $k_2$ des atténuateurs, à former deux signaux $((k_1 - k(t) \cos \lambda(t)), (k_2 - kt \sin \lambda(t)))$ représentant la différence des valeurs entre les coefficients d'atténuation des atténuateurs variables et les produits respectifs des cosinus et sinus du déphasage $\lambda(t)$ par la valeur de l'atténuation $k(t)$, puis à appliquer respectivement les deux signaux ainsi formés à l'entrée de deux intégrateurs (11, 12) pour élaborer en sortie de ces deux intégrateurs deux signaux de commande statique des atténuateurs de façon à annuler la composante de la fréquence porteuse du signal brouilleur reçu, caractérisé en ce qu'il consiste à superposer à chacun des signaux de commande statique, un signal dont l'amplitude est proportionnelle, à tout instant, à l'écart entre la fréquence porteuse du signal brouilleur et à la valeur instantanée de la fréquence de son signal de modulation $\Phi'_B(t)$.

2. Procédé selon la revendication 1, caractérisé en ce qu'il consiste pour obtenir le signal devant être superposé au signal de commande statique des atténuateurs, à séparer les composantes continue et alternative de chaque signal de commande, à transformer la composante alternative obtenue en une grandeur continue proportionnelle à l'amplitude de la composante alternative, pour la multiplier par le signal basse fréquence d'amplitude $\Phi'_B(t)$.

3. Procédé selon l'une quelconque des revendications 1 et 2, caractérisé en ce qu'il consiste à additionner chacun des signaux de commande statique au signal dont l'amplitude est proportionnelle, à tout instant, à l'écart entre la fréquence porteuse du signal brouilleur et à la valeur instantanée de la fréquence du signal de modulation, et à appliquer les signaux résultants sur les entrées respectives de commande des atténuateurs réglables.

4. Dispositif électronique de découplage d'antenne pour supprimer le signal brouilleur modulé en fréquence par un signal basse fréquence d'amplitude $\Phi'_B(t)$, reçu par une antenne de réception (2) par couplage avec une antenne d'émission (1) située dans le voisinage immédiat de cette dernière, dans lequel le signal brouilleur reçu a subi dans l'espace inter-antenne une atténuation $k(t)$ et un angle de déphasage $\lambda(t)$, comprenant un déphaseur (5) relié par son entrée à l'antenne d'émission pour produire sur une première sortie un signal en phase avec le signal brouilleur d'émission et sur une deuxième sortie un signal en quadrature avec le signal brouilleur, un premier atténuateur variable (7) connecté par son entrée à la première sortie du déphaseur, un deuxième atténuateur (6) connecté par son entrée à la deuxième sortie du déphaseur (5), un dispositif de calcul (8) relié par ses entrées aux première et deuxième sorties du déphaseur (5), aux sorties respectives des atténuateurs (6, 7) et à l'antenne de réception (2) pour délivrer sur ses sorties $(S_1, S_2)$ des signaux $k(t) \cos \lambda(t) - k_1$ et $k(t) \sin \lambda(t) - k_2$ représentant respectivement la différence des valeurs entre les coefficients d'atténuation $(k_1$ et $k_2)$ des atténuateurs variables et les produits respectifs des cosinus et sinus du déphasage $\lambda(t)$ par la valeur de l'atténuation $k(t)$, des premier et deuxième intégrateurs (11, 12) reliés aux sorties $(S_1, S_2)$ de l'organe de calcul (8) transmettant les signaux $k(t) \cos \lambda(t) - k_1$ et $k(t) \sin \lambda(t) - k_2$ pour délivrer deux signaux de commande statique des atténuateurs (6, 7), caractérisé en ce qu'il comprend en outre un dispositif (10, 13, 14, 15, 16) pour superposer aux signaux de commande statique un signal dont l'amplitude est proportionnelle, à tout instant, à l'écart entre la fréquence porteuse du signal brouilleur et la valeur instantanée de la fréquence de modulation.

5. Dispositif selon la revendication 4, caractérisé en ce que le dispositif pour superposer aux signaux de commande statique des atténuateurs un signal dont l'amplitude est proportionnelle, à tout instant, à l'écart entre la fréquence porteuse du signal brouilleur et la valeur instantanée de la fréquence de modulation, comprend un séparateur (10) des composantes continue et alternative des signaux $k(t) \cos \lambda(t) - k_1$ et $k(t) \sin \lambda(t) - k_2$ délivrés aux sorties respectives de l'organe de calcul (8), un dispositif (23, 25, 26, 28) pour transformer les composantes alternatives séparées par le séparateur (10) en des signaux dont les valeurs moyennes sont porportionnelles aux amplitudes des composantes alternatives séparées, des multiplicateurs (24, 27) des valeurs moyennes des signaux respectivement obtenues par le signal basse fréquence d'amplitude $\Phi'_B(t)$ et des additionneurs (15, 16) pour additionner respectivement les signaux obtenus en sortie des multiplicateurs (24, 27) aux signaux de commande statique délivrés par les premier et deuxième intégrateurs, les sorties respectives des additionneurs étant reliées aux entrées de commande correspondantes des atténuateurs (6, 7).

6. Dispositif selon la revendication 5, caractérisé en ce que le dispositif pour transformer les composantes alternatives séparées par le séparateur (10) en des signaux dont les valeurs moyennes sont proportionnelles aux amplitudes des composantes alternatives est constitué par des premier et second multiplicateurs (23, 26) reliés chacun sur une de leurs entrées aux sorties respectives de l'organe de calcul (8) délivrant les signaux $k(t) \cos \lambda(t) - k_1$ et $k(t) \sin \lambda(t) - k_2$ et recevant sur leur deuxième entrée le signal basse fréquence d'amplitude $\Phi'_B(t)$ ainsi que par des premier et second intégrateurs (25, 28) reliés par leurs entrées aux sorties respectives des premier et second multiplicateurs (23, 26).

**Claims**

1. Electronic method of decoupling an antenna for eliminating a spurious signal frequency modulated by a low frequency signal of the amplitude $\Phi'_B(t)$ and received by a reception antenna (2) through coupling with a transmitter antenna (1) located in the direct neighborhood of the reception antenna, the spurious signal having been subjected to an attenuation $k(t)$ and a phase shift $\lambda(t)$ in the space between the antennas, of the type consisting in deriving the spurious signal from the transmitter antenna (1) for generating two signals respectively in phase and in quadrature with the spurious signal, attenuating the in-phase and quadrature signals by means of adjustable attenuators (6, 7) and in forming from the signal received by the reception antenna (2), the attenuated signals, the in-phase and quadrature signals as well as the attenuation values $k_1$ and $k_2$ of the attenuators two signals $((k_1 - k(t) \cos \lambda(t))$, $(k_2 - kt \sin \lambda(t)))$ representing the difference of the values between the attenuation coefficients of the variable attenuators and the respective products of the cosine and sine of the phase shift $\lambda(t)$ and the value of the attenuation $k(t)$, and subsequently supplying the two thus formed signals respectively to the input of two integrators (11, 12) for generating at their outputs two static control signals of the attenuators for cancelling the carrier frequency component of the received spurious signal, characterized in that it consists in superimposing onto each of the static control signals a signal the amplitude of which is proportional at any time to the deviation between the carrier frequency of the spurious signal and the momentary value of the frequency of its modulation signal $\Phi'_B(t)$.

2. Method according to claim 1, characterized in that it consists, in order to obtain the signal to be superimposed onto the static control signal of the attenuators, inseparating the direct and alternating components of each control signal, transforming the obtained alternating component into a direct value proportional to the amplitude of the alternating component for multiplication thereof by the low frequency signal of the amplitude $\Phi'_B(t)$.

3. Method according to any of claims 1 and 2, characterized in that it consists in adding each of the static control signals to the signal the amplitude of which is at any time proportional to the deviation between the carrier frequency of the spurious signal and the momentary value of the frequency of the modulation signal, and applying the resulting signals to the respective control inputs of the adjustable attenuators.

4. Electronic device for the decoupling of an antenna in order to eliminate the spurious signal frequency modulated by a low frequency signal of the amplitude $\Phi'_B(t)$ and received by a reception antenna (2) by coupling with a transmitter antenna (1) located in the direct neighborhood of the latter, wherein the received spurious signal has been subjected to an attenuation $k(t)$ and a phase shift angle $\lambda(t)$ in the space between the antennas, comprising a phase shifter (5) connected on its input to the transmitter antenna for producing on a first output a signal in phase with the spurious transmitter signal and on a second output a signal in quadrature with the spurious signal, a first variable attenuator (7) connected on its input to the first output of the phase shifter, a second attenuator (6) connected on its input to the second output of the phase shifter (5), a computing device (8) connected on inputs to the first and second outputs of the phase shifter (5), to the respective outputs of the attenuators (6, 7) and to the reception antenna (2) for supplying on its outputs $(S_1, S_2)$ the signals $k(t) \cos \lambda(t) - k_1$ and $k(t) \sin \lambda(t) - k_2$ respectively representing the difference of the values between the attenuation coefficients $(k_1$ and $k_2)$ of the variable attenuators and the respective products of the cosine and sine of the phase shift $\lambda(t)$ and the value of attenuation $k(t)$, first and second integrators (11, 12) connected to the outputs $(S_1, S_2)$ of the computing device (8) transmitting the signals $k(t) \cos \lambda(t) - k_1$ and $k(t) \sin \lambda(t) - k_2$ for supplying two static control signals for the attenuators (6, 7), characterized in that it further comprises a device (10, 13, 14, 15, 16) for superimposing onto the static control signals a signal the amplitude of which is at any time proportional to the deviation between the carrier frequency of the spurious signal and the momentary value of the modulation frequency.

5. Device according to claim 4, characterized in that the device for superimposing onto the static control signals of the attenuators a signal the amplitude of which is at any time proportional to the deviation between the carrier frequency of the spurious signal and the momentary value of the modulation frequency comprises a separator (10) for separating the direct and alternating components of the signals $k(t) \cos \lambda(t) - k_1$ and $k(t) \sin \lambda(t) - k_2$ supplied by the respective outputs of the computing device (8), a device (23, 25, 26, 28) for transforming the alternating components separated by the separator (10) into signals the mean values of which are proportional to the amplitudes of the separated alternating components, multipliers (24, 27) for multiplying the mean values of the signals respectively obtained by the low frequency signal of the amplitude $\Phi'_B(t)$, and adders (15, 16) for respectively adding the signals obtained at the outputs of the multipliers (24, 27) to the static control signals supplied by the first and second integrators, the respective outputs of the adders being connected to the corresponding control inputs of the attenuators (6, 7).

6. Device according to claim 5, characterized in that the device for transforming the alternating components separated by the separator (10) into signals the mean values of which are proportional to the amplitudes of the alternating components is formed of first and second multipliers (23, 26) each connected on one of its inputs to the respective outputs of the computing device (8) supplying the signals $k(t) \cos \lambda(t) - k_1$ and $k(t) \sin \lambda(t) - k_2$ and receiving on its second input the low frequency signal of the amplitude $\Phi'_B(t)$, as well as of first and second integrators (25, 28) connected on its inputs to the respective outputs of the first and second multipliers (23, 26).


**Ansprüche**

1. Elektronisches Verfahren zum Entkoppeln einer Antenne, um ein Störsignal zu unterdrücken, welches durch ein niederfrequentes Signal der Amplitude $\Phi'_B(t)$ frequenzmoduliert ist und durch eine Empfangsantenne (2) durch Kopplung mit einer Senderantenne (1) empfagen wird, welche sich in der unmittelbaren Nähe der Empfangsantenne befindet, wobei das Störsignal in dem Raum zwischen den Antennen eine Dämpfung $k(t)$ und eine Phasenverschiebung $\lambda(t)$ erfahren hat, derjenigen Art, welches darin besteht, an der Senderantenne (1) das Störsignal abzugreifen, um zwei Signale zu erzeugen, von denen das erste gleichphasig und das zweite um 90° phasenverschoben gegenüber dem Störsignal ist, das gleichphasige und das um 90° phasenverschobene Signal mittels einstellbaren Dämpfungsgliedern (6, 7) zu dämpfen und aus dem durch die Empfangsantenne (2) empfangenen Signal, den gedämpften Signalen, dem gleichphasigen und dem um 90° phasenverschobenen Signal sowie den Dämpfungswerten $k_1$ und $k_2$ der Dämpfungsglieder zwei Signale $((k_1 - k(t) \cos \lambda(t)), (k_2 - kt \sin \lambda(t)))$ zu bilden, welche die Differenz zwischen den Werten der Dämpfungskoeffizienten der variablen Dämpfungsglieder und dem Produkt aus dem Kosinus bzw. Sinus der Phasenverschiebung $\lambda(t)$ und dem Dämpfungswert $k(t)$ darstellen, und anschließend die so gebildeten zwei Signale jeweils an den Eingang eines von zwei Integratoren (11, 12) anzulegen, um am Ausgang dieser zwei Integratoren zwei statische Steuersignale für die Dämpfungsglieder zu erzeugen, dergestalt, daß die Komponente der Trägerfrequenz des empfangenden Störsignals zum Verschwinden gebracht wird, dadurch gekennzeichnet, daß es darin besteht, jedem der zwei statischen Steuersignale ein Signal zu überlagern, dessen Amplitude zu jeder Zeit proportional der Abweichung zwischen der Trägerfrequenz des Störsignals und dem Momentanwert der Frequenz seines Modulationssignals $\Phi'_B(t)$ ist.

2. Verfahren nach Anspruch 1, dadurch gekennzeichnet, daß es darin besteht, um das Signal zu erhalten, welches dem statischen Steuersignal der Dämpfungsglieder überlagert werden soll, die Gleich- und Wechselkomponenten jedes Steuersignals zu trennen, die erhaltene Wechselkomponente in eine Gleichsignalgröße umzuwandeln, welche proportional zur Amplitude der Wechselkomponente ist, um sie mit dem niederfrequenten Signal der Amplitude $\Phi'_B(t)$ zu multiplizieren.

3. Verfahren nach Anspruch 1 oder 2, dadurch gekennzeichnet, daß es darin besteht, jedes statische Steuersignal zu dem Signal hinzuzuaddieren, dessen Amplitude jederzeit proportional zu der Abweichung zwischen der Trägerfrequenz des Störsignals und dem Momentanwert der Frequenz des Modulationssignals ist, und die resultierenden Signale an die entsprechenden Steuereingänge der einstellbaren Dämpfungsglieder anzulegen.

4. Elektronische Vorrichtung zum Entkoppeln einer Antenne, um das Störsignal zu unterdrücken, welches durch ein niederfrequentes Signal der Amplitude $\Phi'_B(t)$ frequenzmoduliert ist und durch eine Empfangsantenne (2) durch Kopplung mit einer Senderantenne (1) empfangen wird, die sich in unmittelbarer Nähe derselben befindet, bei welcher das empfangene Störsignal in dem Raum zwischen den Antennen eine Dämpfung $k(t)$ und einen Phasenverschiebungswinkel $\lambda(t)$ erfahren hat, mit einem Phasenschieber (5), der über seinen Eingang mit der Sendeantenne verbunden ist, um an einem ersten Ausgang ein Signal zu erzeugen, das mit dem senderseitigen Störsignal in Phase ist, und an einem zweiten Ausgang ein Signal zu erzeugen, das gegen das Störsignal um 90° phasenverschoben ist, einem ersten variablen Dämpfungsglied (7), dessen Eingang mit dem ersten Ausgang des Phasenschiebers verbunden ist, einem zweiten Dämpfungsglied (6), dessen Eingang mit dem zweiten Ausgang des Phasenschiebers (5) verbunden ist, einer Rechenvorrichtung (8), deren Eingänge mit dem ersten bzw. zweiten Ausgang des Phasenschiebers (5), mit den jeweiligen Ausgängen der Dämpfungsglieder (6, 7) und mit der Empfangsantenne (2) verbunden sind, um an ihren Ausgängen ($S_1$, $S_2$) Signale $k(t) \cos \lambda(t) - k_1$ und $k(t) \sin \lambda(t) - k_2$ zu erzeugen, welche jeweils die Differenz zwischen den Werten der Dämpfungskoeffizienten ($k_1$ und $k_2$) der variablen Dämpfungsglieder und den entsprechenden Produkten aus dem Kosinus bzw. Sinus der Phasenverschiebung $\lambda(t)$ und dem Dämpfungswert $k(t)$ darstellen, sowie einem ersten und einem zweiten Integrator (11, 12), die an die Ausgänge ($S_1$, $S_2$) der Rechenvorrichtung (8) angeschlossen sind, welche die Signale $k(t) \cos \lambda(t) - k_1$ und $k(t) \sin \lambda(t) - k_2$ überträgt, um zwei Signale zur statischen Steuerung der Dämpfungsglieder (6, 7) abzugeben, dadurch gekennzeichnet, daß sie ferner eine Vorrichtung (10, 13, 14, 15, 16) umfaßt, um den statischen Steuersignalen ein Signal zu überlagern, dessen Amplitude zu jeder Zeit proportional der Abweichung zwischen der Trägerfrequenz des Störsignals und dem Momentanwert der Modulationsfrequenz ist.

5. Vorrichtung nach Anspruch 4, dadurch gekennzeichnet, daß die Vorrichtung zur Überlagerung eines Signals, dessen Amplitude jederzeit proportional der Abweichung zwischen der Trägerfrequenz des Störsignals und dem Momentanwert der Modulationsfrequenz ist mit den statischen Steuersignalen der Dämpfungsglieder einen Separator (10) zur Abtrennung der Gleich- und Wechselkomponenten der Signale $k(t) \cos \lambda(t) - k_1$ und $k(t) \sin \lambda(t) - k_2$ enthält, welche von den entsprechenden Ausgängen der Rechenvorrichtung (8) abgegeben werden, eine Vorrichtung (23, 25, 26, 28) zur Umsetzung der durch den Separator (10) abgetrennten Wechselkomponenten in Signale, deren Mittelwerte proportional zu den Amplituden der abgetrennten Wechselkomponenten sind, Multiplizierer (24, 27) zum Multiplizieren der Mittelwerte der jeweils erhaltenen Signale mit dem niederfrequenten Signal der Amplitude $\Phi'_B(t)$ und Addierer (15, 16) umfaßt, um die an den Ausgängen der Multiplizierer (24, 27) erhaltenen Signale jeweils zu den statischen Steuersignalen hinzuzuaddieren, welche von dem ersten bzw. zweiten Integrator abgegeben werden, wobei die entsprechenden Ausgänge der Addierer mit den jeweiligen Steuereingängen der Dämpfungsglieder (6, 7) verbunden sind.

6. Vorrichtung nach Anspruch 5, dadurch gekennzeichnet, daß die Vorrichtung zur Umsetzung der durch den Separator (10) abgetrennten Wechselkomponenten in Signale, deren Mittelwerte proportional zu den Amplituden der Wechselkomponenten sind, durch einen ersten sowie einen zweiten Multiplizierer (23, 26) gebildet ist, die jeweils an einem ihrer Eingänge mit einem entsprechenden Ausgang der Rechenvorrichtung (8) verbunden sind, welche die Signale $k(t) \cos \lambda(t) - k_1$ und $k(t) \sin \lambda(t) - k_2$ abgibt, und an ihrem zweiten Eingang das niederfrequente Signal der Amplitude $\Phi'_B(t)$ empfangen, sowie aus einem ersten und einem zweiten Integrator (25, 28) gebildet ist, deren Eingang jeweils mit dem entsprechenden Ausgang des ersten bzw. zweiten Multiplizierers (23, 26) verbunden ist.